# EUROPEAN PATENT APPLICATION

(11) **EP 3 263 329 A1**
(43) Date of publication of application: **03.01.2018**
(21) Application number: 17184419.4
(22) Date of filing: 26.03.2013
(51) Int. Cl.: B32B 15/08, B29C 45/14, C09D 175/04, C09D 201/00

(54) **SHAPED AND COATED METALLIC MATERIAL**

(30) Priority: 30.03.2012 JP 2012079751; 08.11.2012 JP 2012246469
(62) Divisional of application: 13769729.8
(71) Applicant: Nisshin Steel Co., Ltd., Chiyoda-ku Tokyo 100-8366 (JP)
(72) Inventor: MORIKAWA, Shigeyasu, Tokyo, 100-8366 (JP); NAKANO, Tadashi, Tokyo, 100-8366 (JP); YAMAMOTO, Masaya, Tokyo, 100-8366 (JP)
(74) Representative: Epping - Hermann - Fischer

(57) **Abstract**

The present invention relates to a shaped and coated metallic material which has excellent adhesion to a molded article of a thermoplastic resin composition and can be produced in a simple manner. The shaped and coated metallic material comprises a shaped metallic material and a coating film formed on the surface of the shaped metallic material. The coating film comprises a polyurethane resin containing a polycarbonate unit. The ratio of the mass of the polycarbonate unit relative to the total mass of resins in the coating film is 15 to 80 mass%. The thickness of the coating film is 0.5 µm or more.

## Description

### Technical Field

The present invention relates to a coated shaped metal material, a composite including a molded article of a thermoplastic resin composition joined to the coated shaped metal material, and a method for producing the composite.

### Background Art

So-called "shaped metal materials" are used in various industrial products such as automobiles. The term "shaped metal material" used herein refers to a product made of a metal given some shape by the application of heat, force, or the like. Examples of the shaped metal materials include metal sheets, press-molded products of metal sheets, and metal members shaped by processing methods such as casting, forging, cutting, and powder metallurgy. A composite including a molded article of a resin composition joined to such a shaped metal material is used in various electronic devices such as cellular mobile phones and personal computers, because the composite is lighter than a part made only of a metal and is stronger than a part made only of a resin. Such a composite has heretofore been produced by the fitting together the shaped metal material and the molded article of a resin composition. This method for producing the composite by fitting, however, requires a large number of steps of operation and has low productivity. Accordingly, in recent years, the composite has generally been produced by joining the molded article of a resin composition to the shaped metal material by means of insert molding.

For the production of the composite by insert molding, it is important to improve the adhesion between the shaped metal material and the molded article of a resin composition. For example, the roughening treatment of the surface of the shaped metal material prior to insert molding has been proposed as a method for enhancing the adhesion between the shaped metal material and the molded article of a resin composition (see PTLs 1 to 3). The methods disclosed in PTLs 1 to 3 involve roughening the surface of an aluminum alloy to thereby improve the joinability of the aluminum alloy to a molded article of a resin composition.

### Citation List

### Patent Literature

PTL 1
   Japanese Patent Application Laid-Open No. 2006-027018
PTL 2
   Japanese Patent Application Laid-Open No. 2004-050488
PTL 3
   Japanese Patent Application Laid-Open No. 2005-342895

### Summary of Invention

### Technical Problem

The composites described in PTLs 1 to 3 produce undesired insufficient adhesion between the shaped metal material and the molded article of a resin composition due to joining based on an anchor effect. In addition, the methods for producing the composites described in PTLs 1 to 3 unfavorably have complicated production steps and increased production cost due to the roughening treatment of the surface of the shaped metal material.

An object of the present invention is to provide a coated shaped metal material that is excellent in adhesion to a molded article of a thermoplastic resin composition and can be easily produced. Another object of the present invention is to provide a composite including a molded article of a thermoplastic resin composition joined to the coated shaped metal material. A further object of the present invention is to provide a method for producing the composite.

### Solution to Problem

The present inventors have found that the above-mentioned problems can be solved by forming a predetermined coating on the surface of a shaped metal material. The present inventors have further conducted studies and thereby completed the present invention.

Specifically, the present invention relates to the following coated shaped metal materials:
[1] A coated shaped metal material including: a shaped metal material; and a coating formed on the surface of the shaped metal material, the coating including a polyurethane resin containing a polycarbonate unit, in which the mass ratio of the polycarbonate unit to the total resin mass in the coating is 15 to 80mass%, and the coating has a film thickness of 0.5 µm or larger.
[2] The coated shaped metal material according to [1], in which the coating includes an oxide, a hydroxide, or a fluoride of a metal selected from the group consisting of Ti, Zr, V, Mo, and W, or a combination thereof.

The present invention also relates to the following composites:
[3] A composite including: a coated shaped metal material according to [1] or [2]; and a molded article of a thermoplastic resin composition joined to the surface of the coated shaped metal material.
[4] The composite according to [3], in which the thermoplastic resin composition is an acrylonitrile-butadiene-styrene resin, a polyethylene terephthalate resin, a polybutylene terephthalate resin, a polycarbonate resin, a polyamide resin, or a polyphenylene sulfide resin, or a combination thereof.

The present invention further relates to the following method for producing a composite:
[5] A method for producing a composite including a molded article of a thermoplastic resin composition joined to a coated shaped metal material, the method including: providing a coated shaped metal material; inserting the coated shaped metal material into an injection molding die; and injecting a thermoplastic resin composition into the injection molding die to join a molded article of the thermoplastic resin composition to the surface of the coated shaped metal material, the coated shaped metal material including a shaped metal material and a coating formed on the surface of the shaped metal material, and the coating including a polyurethane resin containing a polycarbonate unit, in which the mass ratio of the polycarbonate unit to the total resin mass in the coating is 15 to 80mass%, and the coating has a film thickness of 0.5 µm or larger.

### Advantageous Effects of Invention

The present invention can provide a coated shaped metal material that is excellent in adhesion to a molded article of a thermoplastic resin composition and can be easily produced, and a composite including a molded article of a thermoplastic resin composition joined to the coated shaped metal material.

### Description of Embodiments

### 1. Coated Shaped Metal Material

The coated shaped metal material of the present invention includes: a shaped metal material; and a coating formed on the surface of the shaped metal material. The coated shaped metal material may also have a chemical conversion film formed between the shaped metal material and the coating. Hereinafter, each component of the coated shaped metal material will be described.

### (1) Shaped Metal Material

The shaped metal material serving as a base material to be coated is not particularly limited by its type. Examples of the shaped metal material include: metal sheets such as cold-rolled steel sheets, zinc-coated steel sheets, Zn-Al alloy-coated steel sheets, Zn-Al-Mg alloy-coated steel sheets, Zn-Al-Mg-Si alloy-coated steel sheets, aluminum-coated steel sheets, stainless steel sheets (including austenitic, martensitic, ferritic, and ferrite-martensite duplex-phase stainless steel sheets), aluminum sheets, aluminum alloy sheets, and copper sheets; pressed products of metal sheets; and various metal members shaped by processing methods such as casting (aluminum die-casting, zinc die-casting, etc.), forging, cutting, and powder metallurgy. The shaped metal material may be subjected, if necessary, to coating pretreatment known in the art such as degreasing or pickling.

### (2) Chemical Conversion Film

As mentioned above, the coated shaped metal material may also have a chemical conversion film formed between the shaped metal material and the coating. The chemical conversion film is formed on the surface of the shaped metal material and improves the adhesion of the coating to the shaped metal material and the corrosion resistance of the shaped metal material. The chemical conversion film may be formed on at least a region (junction surface) to be joined with a molded article of a thermoplastic resin composition mentioned later, of the surface of the shaped metal material, and is usually formed on the whole surface of the shaped metal material.

The chemical conversion treatment to form the chemical conversion film is not particularly limited by its type. Examples of the chemical conversion treatment include chromate conversion treatment, chromium-free conversion treatment, and bonderizing treatment. The chemical conversion film formed by the chemical conversion treatment is not particularly limited by its coverage as long as the coverage falls within a range effective for improving the coating adhesion and the corrosion resistance. For example, the coverage of the chromate film can be adjusted such that the coverage attains 5 to 100 mg/m² in terms of the total amount of Cr. The coverage of the chromium-free film can be adjusted such that the coverage of a Ti-Mo composite film falls within a range of 10 to 500 mg/m² or the coverage of a fluoro acid film falls within a range of 3 to 100 mg/m² in terms of the amount of fluorine or in terms of the total amount of metal elements. The coverage of the phosphate film can be adjusted to 0.1 to 5 g/m².

### (3) Coating

The coating includes a polyurethane resin containing a polycarbonate unit and improves the adhesion of a molded article of a thermoplastic resin composition to the shaped metal material. As mentioned later, the coating may further contain a polycarbonate unit-free resin as an optional component. The coating, as with the chemical conversion film, may be formed on at least the junction surface of the surface of the shaped metal material and is usually formed on the whole surface of the shaped metal material (or the chemical conversion film).

The polyurethane resin containing a polycarbonate unit has a polycarbonate unit in its molecular chain. The "polycarbonate unit" refers to a structure shown below in the molecular chain of the polyurethane resin. The polyurethane resin containing a polycarbonate unit is similar in backbone (such as a benzene ring) and functional group to a thermoplastic resin contained in a molded article of a thermoplastic resin composition mentioned later. Accordingly, in the case of insert-molding the thermoplastic resin composition to the coated shaped metal material, the polyurethane resin containing a polycarbonate unit is uniformly blended with the thermoplastic resin composition to form a strong bond therebetween. Thus, the polyurethane resin containing a polycarbonate unit, contained in the coating, can improve the adhesion of a molded article of the thermoplastic resin composition to the coating.

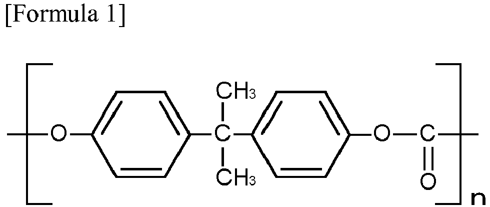

The polyurethane resin containing a polycarbonate unit can be prepared, for example, by steps described below. An organic polyisocyanate is reacted with a polycarbonate polyol and a polyol having a tertiary amino group or a carboxyl group to form a urethane prepolymer. Polyols other than the polycarbonate polyol compound, for example, polyester polyol and polyether polyol, may be used in combination to a extent that does not compromise the objects of the present invention.

The tertiary amino group of the urethane prepolymer thus produced can be neutralized with an acid or quaternized with a quaternizing agent, followed by chain elongation using water to form a cationic polyurethane resin containing a polycarbonate unit.

Alternatively, the carboxyl group of the produced urethane prepolymer can be neutralized with a basic compound such as triethylamine, trimethylamine, diethanolmonomethylamine, diethylethanolamine, caustic soda, or caustic potassium for conversion to a carboxylate to form an anionic polyurethane resin containing a polycarbonate unit.

The polycarbonate polyol is obtained through the reaction of a carbonate compound such as dimethyl carbonate, diethyl carbonate, ethylene carbonate, or propylene carbonate with a diol compound such as ethylene glycol, propylene glycol, dipropylene glycol, neopentyl glycol, methylpentanediol, dimethylbutanediol, butyl ethyl propanediol, diethylene glycol, triethylene glycol, tetraethylene glycol, 1,4-butanediol, 1,4-cyclohexanediol, or 1,6-hexanediol. The polycarbonate polyol may be obtained by chain elongation from an isocyanate compound.

The organic polyisocyanate is not particularly limited by its type. Examples of the organic polyisocyanate include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate, and 4,4'-dicyclohexylmethane diisocyanate. These organic polyisocyanates may be used alone or in combination.

The coating may further contain a polycarbonate unit-free resin as an optional component. The polycarbonate unit-free resin further improves the adhesion of the coating to the shaped metal material. The polycarbonate unit-free resin is not particularly limited by its type as long as the resin contains no polycarbonate unit in its molecular chain. A polycarbonate unit-free resin containing a polar group is preferred from the viewpoint of improving the adhesion of the coating to the shaped metal material. Examples of the type of the polycarbonate unit-free resin include epoxy resins, polyolefin resins, phenol resins, acrylic resins, polyester resins, and polycarbonate unit-free polyurethane resins. These resins may be used alone or in combination.

Examples of the epoxy resins include bisphenol A epoxy resins, bisphenol F epoxy resins, and bisphenol AD epoxy resins. Examples of the polyolefin resins include polyethylene resins and polypropylene resins. Examples of the phenol resins include novolac resins and resol resins. The polycarbonate unit-free polyurethane resins are obtained by the copolymerization of diols and diisocyanates. Examples of the diols include diols other than polycarbonate diol, for example, bisphenol A, 1,6-hexanediol, and 1,5-pentanediol. Examples of the diisocyanates include aromatic diisocyanates, aliphatic diisocyanates, and alicyclic diisocyanates.

The mass ratio of the polycarbonate unit to the total resin mass is 15 to 80mass%. A polycarbonate unit at a mass ratio less than 15mass% might insufficiently produce the adhesion of a molded article of a thermoplastic resin composition to the coating. On the other hand, a polycarbonate unit at a mass ratio exceeding 80mass% might insufficiently produce the adhesion of the coating to the shaped metal material. The mass ratio of the polycarbonate unit to the total resin mass can be determined by nuclear magnetic resonance spectroscopy (NMR analysis) using a sample of the coating dissolved in chloroform.

Preferably, the coating further contains an oxide, a hydroxide, or a fluoride of a metal (valve metal) selected from the group consisting of Ti, Zr, V, Mo, and W, or a combination thereof. Any of these metal compounds dispersed in the coating can further improve the corrosion resistance of the shaped metal material. Particularly, the fluorides of these metals can also be expected to suppress the corrosion of a film defect area by virtue of their self-repairing effects.

The coating may further contain a soluble or poorly soluble metal phosphate or complex phosphate. The soluble metal phosphate or complex phosphate further improves the corrosion resistance of the shaped metal material by complementing the self-repairing effects of the metal fluoride(s) mentioned above. The poorly soluble metal phosphate or complex phosphate dispersed in the coating improves film strength. The soluble or poorly soluble metal phosphate or complex phosphate is, for example, a salt of Al, Ti, Zr, Hf, Zn, or the like.

The coating is not particularly limited by its film thickness as long as the film thickness is 0.5 µm or larger. A coating having a film thickness smaller than 0.5 µm might not be able to sufficiently improve the adhesion of a molded article of a thermoplastic resin composition to the shaped metal material. The upper limit of the film thickness of the coating is not particularly limited and may be approximately 20 µm. The coating, even if having a film thickness exceeding 20 µm, cannot be expected to further improve the adhesion.

The coating may be supplemented with an etching agent, an inorganic compound, a lubricant, a color pigment, a dye, and the like in addition to the resin(s) mentioned above. The etching agent improves the adhesion of the coating to the shaped metal material by activating the surface of the shaped metal material. A fluoride such as hydrofluoric acid, ammonium fluoride, fluorozirconic acid, or fluorotitanic acid is used as the etching agent. The inorganic compound improves water resistance by densifying the coating. Examples of the inorganic compound include: sols of inorganic oxides such as silica, alumina, and zirconia; and phosphates such as sodium phosphate, calcium phosphate, manganese phosphate, and magnesium phosphate. Examples of the lubricant include: organic lubricants such as fluorine-based lubricants, polyethylene-based lubricants, and styrene-based lubricants; and inorganic lubricants such as molybdenum disulfide and talc. Further addition of an inorganic pigment, an organic pigment, an organic dye, or the like may impart a predetermined color tone to the coating.

The coated shaped metal material of the present invention is not particularly limited by its production method. The coated shaped metal material of the present invention can be produced, for example, by the following method.

First, the shaped metal material serving as a base material to be coated is provided. When the chemical conversion film is formed, chemical conversion treatment is performed prior to formation of the coating. When the chemical conversion film is not formed, the coating is formed directly thereon.

In the case of forming the chemical conversion film on the surface of the shaped metal material, the chemical conversion film can be formed by the application of a chemical conversion treatment solution to the surface of the shaped metal material followed by drying. The method for applying the chemical conversion treatment solution is not particularly limited and can be appropriately selected from methods known in the art. Examples of such application methods include roll coating, curtain flow, spin coating, spraying, and dip-drawing methods. The conditions for the drying of the chemical conversion treatment solution may be appropriately set according to the composition of the chemical conversion treatment solution, etc. For example, the shaped metal material having the chemical conversion treatment solution applied thereon can be placed in a drying oven without being washed with water, and then heated at a peak plate temperature within a range of 80 to 250°C to form a uniform chemical conversion film on the surface of the shaped metal material.

The coating can be formed on the surface of the shaped metal material (or the chemical conversion film) by the application thereto of a coating material containing the above-mentioned polyurethane resin containing a polycarbonate unit followed by baking. The method for applying the coating material is not particularly limited and can be appropriately selected from methods known in the art. Examples of such application methods include roll coating, curtain flow, spin coating, spraying, and dip-drawing methods. The conditions for the baking of the coating material may be appropriately set according to the composition of the coating material, etc. For example, the shaped metal material having the coating material applied thereon can be placed in a drying oven and dried with a hot-air dryer at a peak plate temperature within a range of 110 to 200°C to form a uniform coating on the surface of the shaped metal material (or the chemical conversion film).

As described above, the coated shaped metal material of the present invention has the coating containing a predetermined amount of the polyurethane resin containing a polycarbonate unit and is therefore excellent in adhesion to a molded article of a thermoplastic resin composition. In addition, the coated shaped metal material of the present invention can be easily produced merely by the application of the coating material containing the polyurethane resin containing a polycarbonate unit followed by baking.

### 2. Composite

A molded article of a thermoplastic resin composition can be joined to the surface of the coated shaped metal material of the present invention to produce a composite.

The molded article of a thermoplastic resin composition is joined to the surface of the above-mentioned coated shaped metal material (more accurately, the surface of the coating). The shape of the molded article of a thermoplastic resin composition is not particularly limited and can be appropriately selected according to use.

The thermoplastic resin constituting the molded article of a thermoplastic resin composition is not particularly limited by its type. Examples of the thermoplastic resin include acrylonitrile-butadiene-styrene (ABS) resins, polyethylene terephthalate (PET) resins, polybutylene terephthalate (PBT) resins, polycarbonate (PC) resins, polyamide (PA) resins, and polyphenylene sulfide (PPS) resins, and combinations thereof. Among them, a thermoplastic resin containing a benzene ring, as with the polycarbonate unit, is preferred, and a PBT resin or a PPS resin is particularly preferred.

The PBT resin is obtained, for example, by the condensation of 1,4-butanediol with terephthalic acid and has the following structure:

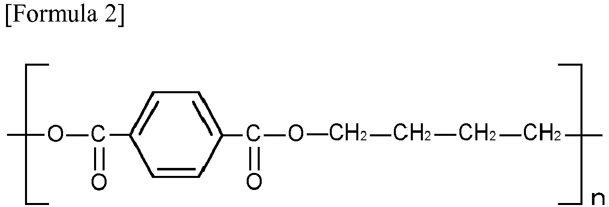

The PPS resin is obtained, for example, by the condensation of p-dichlorobenzene with sodium sulfide in an amide solvent and has the following structure:

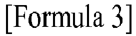

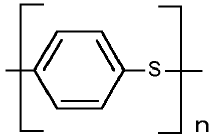

The thermoplastic resin composition may also contain an inorganic filler, a thermoplastic polymer, and the like, from the viewpoint of mold shrinkage factors, material strength, mechanical strength, scratch resistance, etc. Particularly, for using the thermoplastic resin having no benzene ring, it is preferred to add thereto a thermoplastic polymer having a benzene ring.

The inorganic filler improves the rigidity of the molded article of the thermoplastic resin composition. The inorganic filler is not particularly limited by its type, and a known substance can be used. Examples of the inorganic filler include: fibrous fillers such as glass fibers, carbon fibers, and aramid resins; powder fillers such as carbon black, calcium carbonate, calcium silicate, magnesium carbonate, silica, talc, glass, clay, lignin, mica, quartz powders, and glass spheres; and pulverized carbon fibers or aramid fibers. The content of the inorganic filler is not particularly limited and is preferably within a range of 5 to 50mass%. These inorganic fillers may be used alone or in combination.

The thermoplastic polymer improves the shock resistance of the molded article of the thermoplastic resin composition. The thermoplastic polymer is not particularly limited by its type. Examples of the thermoplastic polymer having a benzene ring include acrylonitrile-butadiene-styrene resins, polyethylene terephthalate resins, polybutylene terephthalate resins, polycarbonate resins, polystyrene resins, and polyphenylene ether resins. Examples of the thermoplastic polymer having no benzene ring include polyolefin resins. These thermoplastic polymers may be used alone or in combination.

### 3. Method for Producing Composite

A method for producing the composite of the present invention includes: 1) providing a coated shaped metal material; 2) inserting the coated shaped metal material into an injection molding die; and 3) joining a molded article of a thermoplastic resin composition to the surface of the coated shaped metal material.

### Hereinafter, these procedures of the present invention will be described.

### Step (1)

A coated shaped metal material is provided by the procedures mentioned above.

### Step (2)

The coated shaped metal material thus provided is inserted into an injection molding die. The coated shaped metal material may be processed into a desired shape by pressing or the like.

### Step (3)

A thermoplastic resin composition having a high temperature is injected at a high pressure into the injection molding die having the coated shaped metal material thus inserted therein. In this respect, the injection molding die is preferably provided with a degassing port that allows the thermoplastic resin composition to flow smoothly. The thermoplastic resin composition having a high temperature comes in contact with the coating formed on the surface of the coated shaped metal material. The temperature of the injection molding die is preferably around the melting point of the thermoplastic resin composition.

After the completion of the injection, the die is opened and released to obtain a composite. The composite obtained by injection molding may be subjected to annealing treatment after the molding to cancel internal strain ascribable to mold shrinkage.

### The composite of the present invention can be produced by these procedures.

As described above, a molded article of a thermoplastic resin composition can be joined to the surface of the coated shaped metal material of the present invention to produce a composite. The coated shaped metal material of the present invention has a predetermined coating that is excellent in adhesion both to the shaped metal material and to the molded article of a thermoplastic resin composition. For this reason, the composite of the present invention is excellent in the adhesion between the shaped metal material and the molded article of a thermoplastic resin composition.

Hereinafter, the present invention will be described in detail with reference to Examples. However, the present invention is not intended to be limited by these Examples.

### Examples

### [Example 1]

In Example 1, each coated shaped metal material was provided and examined for its corrosion resistance.
1. Preparation of Coated Shaped Metal Material
(1) Shaped Metal Material

Stainless steel sheets, a molten Zn-Al-Mg alloy-coated steel sheet, a molten Al-coated steel sheet, and molten Al-containing Zn-coated steel sheets were provided as base materials to be coated for coated shaped metal materials.

### A. Stainless Steel Sheet

SUS304 and SUS430 (both 2D-finish) having a sheet thickness of 0.8 mm were provided as stainless steel sheets.

### B. Molten Zn-Al-Mg Alloy-Coated Steel Sheet

A molten Zn-6mass% Al-3mass% Mg alloy-coated steel sheet having a coating coverage of 45 g/m² on one side was provided as a molten Zn-Al-Mg alloy-coated steel sheet. The base steel sheet used was a cold-rolled steel sheet (SPCC) having a sheet thickness of 0.8 mm.

### C. Molten Al-Coated Steel Sheet

A molten Al-9mass% Si alloy-coated steel sheet having a coating coverage of 45 g/m² on one side was provided as a molten Al-coated steel sheet. The base steel sheet used was a cold-rolled steel sheet (SPCC) having a sheet thickness of 0.8 mm.

### D. Molten Al-Containing Zn-Coated Steel Sheet

A molten Zn-0.18mass% Al alloy-coated steel sheet and a molten Zn-55mass% Al alloy-coated steel sheet each having a coating coverage of 45 g/m² on one side were provided as molten Al-containing Zn-coated steel sheets. Both of the base steel sheets used were cold-rolled steel sheets (SPCC) having a sheet thickness of 0.8 mm.

### (2) Preparation of Coating Material

Each polycarbonate unit-containing resin, each polycarbonate unit-free resin, and various additives were added to water such that the mass ratio of the polycarbonate (PC) unit to the total resin mass attained the predetermined ratio shown in Table 1 to prepare a coating material having 20% nonvolatile components (see Table 1). When a plurality of polycarbonate unit-free resins were used, these polycarbonate unit-free resins were added thereto in equal amounts. Each coating material was supplemented with 0.5mass% of ammonium fluoride (Morita Chemical Industries Co., Ltd.) as an etching agent, 2mass% of colloidal silica (Nissan Chemical Industries, Ltd.) as an inorganic compound, and 0.5mass% of phosphoric acid (Kishida Chemical Co., Ltd.).

### A. Polycarbonate Unit-Containing Resin

As for each polycarbonate unit-containing resin shown in Table 1, SF-420 (Dai-Ichi Kogyo Seiyaku Co., Ltd.) was used as a polyurethane resin containing 50mass% of the polycarbonate unit. SF-470 (Dai-Ichi Kogyo Seiyaku Co., Ltd.) was used as a polyurethane resin containing 70mass% of the polycarbonate unit. HUX-386 (ADEKA Corp.) was used as a polyurethane resin containing 80mass% of the polycarbonate unit. A product under test provided by a resin manufacturer was used as a polyurethane resin containing 90mass% of the polycarbonate unit. A resin composition composed of 100mass% of the polycarbonate unit was prepared by the following method: a polycarbonate sheet (TAKIRON Co., Ltd.) having a sheet thickness of 2.0 mm was cut into approximately 5 mm square to obtain polycarbonate pieces. To 200 g of methylene chloride, 30 g of the polycarbonate pieces thus cut was added, and the mixture was stirred for 3 hours under heating to a solution temperature of 40°C to dissolve the polycarbonate pieces in methylene chloride. The resin composition composed of 100mass% of the polycarbonate unit was prepared by this step.

### B. Polycarbonate Unit-Free Resin

As for each polycarbonate unit-free resin shown in Table 1, HUX-232 (ADEKA Corp.) or SF-170 (Dai-Ichi Kogyo Seiyaku Co., Ltd.) was used as a polycarbonate unit-free polyurethane resin. ADEKA Resin EM-0461N (ADEKA Corp.) or Super Ester E650 (Arakawa Chemical Industries, Ltd.) was used as an epoxy resin. HARDLEN NZ-1005 (Toyobo Co., Ltd.) or MGP1650 (Maruyoshi Chemical Co., Ltd.) was used as a polyolefin resin. TAMANOL E-100 (Arakawa Chemical Industries, Ltd.) or IG-1002 (DIC Corp.) was used as a phenol resin.

### (3) Formation of Coating

Each base material to be coated was dipped for 1 minute in an aqueous alkali solution for degreasing (pH = 12) having a solution temperature of 60°C to degrease the surface. Subsequently, each coating material was applied to the degreased surface of the base material to be coated using a roll coater and dried with a hot-air dryer at a peak metal temperature of 150°C to form a coating having the film thickness shown in Table 1.

**[Table 1]**

| Coated shaped metal material No. | PC unit (mass%) | PC unit-containing resin | PC unit-fee resin | Film thickness of coating (µm) | Base material to be coated |
|---|---|---|---|---|---|
| 1 | 15 | B | a | 1.0 | 1 |
| 2 | 15 | B | a, b | 3.2 | 2 |
| 3 | 30 | C | b | 0.5 | 3 |
| 4 | 30 | C | b | 1.6 | 4 |
| 5 | 30 | C | b, f | 2.2 | 5 |
| 6 | 30 | C | b, c , f, h | 3.0 | 6 |
| 7 | 30 | C | b, h | 2.2 | 3 |
| 8 | 30 | D | a | 2.5 | 3 |
| 9 | 30 | D | a, d | 1.1 | 3 |
| 10 | 30 | D | e, g | 8.4 | 5 |
| 11 | 50 | B | a | 4.1 | 1 |
| 12 | 50 | C | b | 3.3 | 4 |
| 13 | 70 | B | - | 1.0 | 6 |
| 14 | 70 | C | a | 1.0 | 3 |
| 15 | 80 | C | - | 1.4 | 3 |
| 16 | 80 | D | b | 1.8 | 3 |
| 17 | 50 | B | a | 0.4 | 5 |
| 18 | 80 | D | d | 0.1 | 5 |
| 19 | 0 | - | a | 2.3 | 2 |
| 20 | 0 | - | b, c | 1.6 | 3 |
| 21 | 5 | A | a | 1.1 | 4 |
| 22 | 14 | B | a, e | 3.5 | 5 |
| 23 | 85 | D | b | 2.4 | 6 |
| 24 | 100 | E | - | 0.8 | 3 |

- PC Unit-Containing Polyurethane Resin
   A: Polyurethane resin containing 50mass% of the PC unit (SF-420)
   B: Polyurethane resin containing 70mass% of the PC unit (SF-470)
   C: Polyurethane resin containing 80mass% of the PC unit (HUX-386)
   D: Polyurethane resin containing 90mass% of the PC unit
   E: Resin composition composed of 100mass% of the PC unit
- PC Unit-Free Resin
   a: PC unit-free polyurethane resin (HUX-232)
   b: PC unit-free polyurethane resin (SF-170)
   c: Epoxy resin (ADEKA Resin EM-0461N)
   d: Epoxy resin (Super Ester E650)
   e: Polyolefin resin (HARDLEN NZ-1005)
   f: Polyolefin resin (MGP1650)
   g: Phenol resin (TAMANOL E-100)
   h: Phenol resin (IG-1002)
- Base Material to Be Coated
   1: SUS304
   2: SUS430
   3: Molten Zn-6mass% Al-3mass% Mg alloy-coated steel sheet
   4: Molten Al-9mass% Si alloy-coated steel sheet
   5: Molten Zn-0.18mass% Al alloy-coated steel sheet
   6: Molten Zn-55mass% Al alloy-coated steel sheet

### 2. Evaluation of Coated Shaped Metal Material

### (1) Corrosion Resistance Test

A test piece (30 mm wide x 100 mm long) was cut out of each coated shaped metal material and subjected to the corrosion resistance test. According to JIS Z 2371, an aqueous NaCl solution of 35°C was sprayed onto each test piece with sealed end faces for 120 hours. After the spraying of the aqueous NaCl solution, each coated shaped metal material was evaluated for its corrosion resistance on the basis of the occurrence of white rust on the surface. The coated shaped metal material was evaluated as "Poor" when the occurrence of white rust was 50area% or larger, as "Fair" when the occurrence of white rust was 20area% or larger and smaller than 50area%, as "Good" when the occurrence of white rust was 10area% or larger and smaller than 20area%, and as "Excellent" when the occurrence of white rust was smaller than 10area%.

### (2) Results

The occurrence of white rust on the provided coated shaped metal materials is shown in Table 2.

**[Table 2]**

| Coated shaped metal material No. | Occurrence of white rust (area%) |
|---|---|
| 1 | 0 (Excellent) |
| 2 | 0 (Excellent) |
| 3 | 0 (Excellent) |
| 4 | 0 (Excellent) |
| 5 | 0 (Excellent) |
| 6 | 0 (Excellent) |
| 7 | 0 (Excellent) |
| 8 | 0 (Excellent) |
| 9 | 0 (Excellent) |
| 10 | 0 (Excellent) |
| 11 | 0 (Excellent) |
| 12 | 0 (Excellent) |
| 13 | 0 (Excellent) |
| 14 | 0 (Excellent) |
| 15 | 2 (Excellent) |
| 16 | 2 (Excellent) |
| 17 | 2 (Excellent) |
| 18 | 5 (Excellent) |
| 19 | 0 (Excellent) |
| 20 | 2 (Excellent) |
| 21 | 0 (Excellent) |
| 22 | 3 (Excellent) |
| 23 | 6 (Excellent) |
| 24 | 12 (Good) |

As shown in Table 2, all the provided coated shaped metal materials (coated shaped metal material Nos. 1 to 24) had favorable corrosion resistance. The roughened surface of a shaped metal material cannot be subjected to rust prevention treatment due to the need for exerting an anchor effect on a molded article of a thermoplastic resin composition. The resulting shaped metal material has poor corrosion resistance. By contrast, the coated shaped metal material used in the present invention has a resin coating formed on the surface of a base material to be coated and is therefore excellent in corrosion resistance.

### [Example 2]

In Example 2, each composite of a coated shaped metal material and a molded article of a thermoplastic resin composition was prepared and examined for the adhesion between the coated shaped metal material and the molded article of a thermoplastic resin composition.

### 1. Preparation of Composite

### (1) Coated Shaped Metal Material

Coated shaped metal material Nos. 1 to 24 of Example 1 were provided.

### (2) Thermoplastic Resin Composition

Thermoplastic resin compositions shown in Table 3 were prepared. As for each thermoplastic resin composition shown in Table 3, EXCELLOY CK10G20 (no distinct melting point is confirmed; Techno Polymer Co., Ltd.) was used as an acrylonitrile-butadiene-styrene (ABS) resin composition. A sample (melting point: 230°C) provided by a resin manufacturer was used as a polyethylene terephthalate (PET) resin composition. NOVADURAN 5710F40 (melting point: 230°C; Mitsubishi Engineering-Plastics Corp.) was used as a polybutylene terephthalate (PBT) resin composition. IUPILON GS-2030MR2 (melting point: 250°C; Mitsubishi Engineering-Plastics Corp.) was used as a polycarbonate (PC) resin composition. Amilan CM3511G50 (melting point: 216°C; Toray Industries, Inc.) was used as a polyamide (PA) resin composition. 1130MF1 (melting point: 280°C; Polyplastics Co., Ltd.) was used as a polyphenylene sulfide (PPS) resin composition. Each thermoplastic resin composition contained each filler shown in Table 3. The mold shrinkage factor represents a value measured in the flow direction.

**[Table 3]**

| Thermoplastic resin composition No. | Thermoplastic resin | Thermoplastic polymer | Filler (mass%) | Mold shrinkage factor (%) | Resin temperature during injection molding (°C) |
|---|---|---|---|---|---|
| 1 | ABS resin | PC resin | Glass fiber (20) | 0.1 | 280 |
| 2 | PET resin | PC resin | Glass fiber (30) | 0.3 | 260 |
| 3 | PBT resin | PC resin | Glass fiber (40) | 0.3 | 260 |
| 4 | PC resin | - | Glass fiber(30) | 0.2 | 310 |
| 5 | PA resin | Polyolefin resin | Glass fiber (50) | 0.2 | 280 |
| 6 | PPS resin | Polyolefin resin | Glass fiber (40) | 0.3 | 320 |

(3) Joining (Insert Molding) of Molded Article of Thermoplastic Resin Composition

Each coated shaped metal material was inserted into an injection molding die. Each thermoplastic resin composition in a molten state was injected into the injection molding die. The volume of a portion to which the thermoplastic resin composition is injected in the injection molding die is 30 mm wide x 100 mm long x 4 mm thick. The coating is contacted with the thermoplastic resin composition in a region of 30 mm wide x 30 mm long. The thermoplastic resin composition thus injected into the injection molding die was solidified to obtain a composite of the coated shaped metal material and the molded article of the thermoplastic resin.

2. Evaluation of Adhesion

### (1) Measurement of peel strength

### The coated shaped metal material and the molded article of the thermoplastic resin composition were both pulled at a rate of 100 mm/min in the coplanar direction, and the strength at break (peel strength) was measured. The composite was evaluated as "Poor" when the peel strength was less than 1.0 kN, as "Fair" when the peel strength was 1.0 kN or more and less than 1.5 kN, as "Good" when the peel strength was 1.5 kN or more and less than 2.0 kN, and as "Excellent" when the peel strength was 2.0 kN or more.

### (2) Results

### The results of measuring the peel strength of the evaluated composites are shown in Table 4.

**[Table 4]**

| Category | Coated shaped metal material No. | Thermoplastic composition No. | PC unit (mass%) | Film thickness of coating (µm) | Peel strength (kN) |
|---|---|---|---|---|---|
| Example 1 | 1 | 1 | 15 | 1.0 | 1.5 (Good) |
| Example 2 | 2 | 2 | 15 | 3.2 | 1.5 (Good) |
| Example 3 | 3 | 3 | 30 | 0.5 | 1.6 (Good) |
| Example 4 | 4 | 4 | 30 | 1.6 | 2.0 (Excellent) |
| Example 5 | 5 | 5 | 30 | 2.2 | 2.2 (Excellent) |
| Example 6 | 6 | 6 | 30 | 3.0 | 2.1 (Excellent) |
| Example 7 | 7 | 1 | 30 | 2.2 | 1.8 (Good) |
| Example 8 | 8 | 2 | 30 | 2.5 | 1.7 (Good) |
| Example 9 | 9 | 3 | 30 | 1.1 | 2.0 (Excellent) |
| Example 10 | 10 | 4 | 30 | 8.4 | 1.6 (Good) |
| Example 11 | 11 | 5 | 50 | 4.1 | 1.6 (Good) |
| Example 12 | 12 | 6 | 50 | 3.3 | 2.3 (Excellent) |
| Example 13 | 13 | 4 | 70 | 1.0 | 1.8 (Good) |
| Example 14 | 14 | 5 | 70 | 1.0 | 1.6 (Good) |
| Example 15 | 15 | 6 | 80 | 1.4 | 2.0 (Excellent) |
| Example 16 | 16 | 5 | 80 | 1.8 | 2.1 (Excellent) |
| Example 17 | 3 | 6 | 30 | 0.5 | 1.6 (Good) |
| Example 18 | 6 | 3 | 30 | 3.0 | 2.0 (Excellent) |
| Example 19 | 9 | 1 | 30 | 1.1 | 1.7 (Good) |
| Example20 | 10 | 3 | 30 | 8.4 | 2.3 (Excellent) |
| Example21 | 12 | 6 | 50 | 3.3 | 2.2 (Excellent) |
| Example22 | 13 | 6 | 70 | 1.0 | 1.8 (Good) |
| Example23 | 16 | 3 | 80 | 1.8 | 2.0 (Excellent) |
| Comparative Example 1 | 17 | 3 | 50 | 0.4 | 1.4 (Fair) |
| Comparative Example 2 | 18 | 5 | 80 | 0.1 | 1.0 (Fair) |
| Comparative Example 3 | 19 | 3 | 0 | 2.3 | 0.0 (Poor) |
| Comparative Example 4 | 20 | 4 | 0 | 1.6 | 0.0 (Poor) |
| Comparative Example 5 | 21 | 5 | 5 | 1.1 | 0.6 (Poor) |
| Comparative Example 6 | 22 | 4 | 14 | 3.5 | 1.3 (Fair) |
| Comparative Example 7 | 23 | 5 | 85 | 2.4 | 1.3 (Fair) |
| Comparative Example 8 | 24 | 6 | 100 | 0.8 | 0.0 (Poor) |

The composites of Comparative Examples 1 and 2 had poor adhesion between the coated shaped metal material and the molded article of the thermoplastic resin composition, because their coatings had a film thickness smaller than 0.5 µm. The composites of Comparative Examples 3 to 8 had poor adhesion between the coated shaped metal material and the molded article of the thermoplastic resin composition, because the mass ratio of the polycarbonate unit to the total resin mass in their coatings did not fall within the predetermined range. By contrast, the composites of Examples 1 to 23 had excellent adhesion between the coated shaped metal material and the molded article of the thermoplastic resin composition because their coatings had a film thickness that fell within the predetermined range and because the mass ratio of the polycarbonate unit to the total resin mass in their coatings fell within the predetermined range.

The present application claims the priorities based on Japanese Patent Application No. 2012-079751 filed on March 30, 2012 and Japanese Patent Application No. 2012-246469 filed on November 8, 2012. The contents described in the specifications and accompanying drawings of these applications are incorporated herein by reference in their entirety.

### Industrial Applicability

The composite of the present invention is excellent in the adhesion between the coated shaped metal material and the molded article of a thermoplastic resin composition and as such, is preferably used in, for example, various electronic devices, consumer electronics, medical equipment, automobile bodies, car interior accessories, and constructional materials.

According to an aspect a coated shaped metal material comprising: a shaped metal material; and a coating formed on a surface of the shaped metal material, wherein the coating comprising a polyurethane resin containing a polycarbonate unit, a mass ratio of the polycarbonate unit to a total resin mass in the coating is 15 to 80mass%, and the coating has a film thickness of 0.5 µm or larger.

According to an aspect the coating comprises an oxide, a hydroxide, or a fluoride of a metal selected from the group consisting of Ti, Zr, V, Mo, and W, or a combination thereof.

According to an aspect a composite comprising: the coated shaped metal material as mentioned above; and a molded article of a thermoplastic resin composition joined to a surface of the coated shaped metal material.

According to an aspect the thermoplastic resin composition is an acrylonitrile-butadiene-styrene resin, a polyethylene terephthalate resin, a polybutylene terephthalate resin, a polycarbonate resin, a polyamide resin, or a polyphenylene sulfide resin, or a combination thereof.

According to an aspect a method for producing a composite comprising a molded article of a thermoplastic resin composition joined to a coated shaped metal material, the method comprising:
providing a coated shaped metal material;

inserting the coated shaped metal material into an injection molding die; and
injecting a thermoplastic resin composition into the injection molding die to join a molded article of the thermoplastic resin composition to a surface of the coated shaped metal material, wherein
   the coated shaped metal material comprising a shaped metal material and a coating formed on a surface of the shaped metal material,
   the coating comprising a polyurethane resin containing a polycarbonate unit,
a mass ratio of the polycarbonate unit to a total resin mass in the coating is 15 to 80mass%, and
   the coating has a film thickness of 0.5 µm or larger.

## Claims

1. A coated shaped metal material comprising:
a shaped metal material; and
a coating formed on a surface of the shaped metal material, wherein
the coating comprises a polyurethane resin containing a polycarbonate unit,
a mass ratio of the polycarbonate unit to a total resin mass in the coating is 15 to 80mass%, and
the coating has a film thickness of 0.5 µm or larger.

2. The coated shaped metal material according to claim 1, wherein the coating comprises an oxide, a hydroxide, or a fluoride of a metal selected from the group consisting of Ti, Zr, V, Mo, and W, or a combination thereof.
